(19) Europäisches Patentamt
European Patent Office
Office européen des brevets

(11) **EP 3 374 239 B1**

(12) **FASCICULE DE BREVET EUROPEEN**

(45) Date de publication et mention
de la délivrance du brevet:
**06.11.2019 Bulletin 2019/45**

(21) Numéro de dépôt: **16778058.4**

(22) Date de dépôt: **07.10.2016**

(51) Int Cl.:
**B60S 1/40** *(2006.01)*    **B60R 25/00** *(2013.01)*
**B60S 1/04** *(2006.01)*

(86) Numéro de dépôt international:
**PCT/EP2016/074064**

(87) Numéro de publication internationale:
**WO 2017/080731 (18.05.2017 Gazette 2017/20)**

(54) **DISPOSITIF DE VERROUILLAGE D'UN BALAI D'ESSUIE-GLACE À UN BRAS D'ENTRAÎNEMENT**

VORRICHTUNG ZUM VERRIEGELN EINES WISCHBLATTS AN EINEM ANTRIEBSARM

DEVICE FOR LOCKING A WIPER BLADE TO A DRIVE ARM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.11.2015 FR 1560685**

(43) Date de publication de la demande:
**19.09.2018 Bulletin 2018/38**

(73) Titulaire: **Valeo Systèmes d'Essuyage**
**78322 Le Mesnil Saint Denis (FR)**

(72) Inventeurs:
• **CARRION, Julien**
**63340 Charbonnier les Mines (FR)**
• **ANDRE-MASSE, Laurent**
**63500 Issoire (FR)**
• **BAYARD, Geoffrey**
**63800 Cournon (FR)**
• **CHASSAING, Christophe**
**63490 Sauxillanges (FR)**
• **KOLANOWSKI, Grégory**
**43300 Siaugues Sainte Marie (FR)**
• **MARQUET, Chantal**
**43100 Brioude (FR)**
• **PETITET, Gilles**
**63500 Issoire (FR)**

(74) Mandataire: **Valeo Systèmes d'Essuyage**
**ZA L'Agiot**
**8, Rue Louis Lormand**
**CS 90581 La Verrière**
**78322 Le Mesnil Saint Denis (FR)**

(56) Documents cités:
DE-A1- 3 825 322        DE-A1-102010 040 881
DE-A1-102012 210 544

## Description

La présente invention concerne un dispositif de verrouillage d'un balai d'essuie-glace à un bras d'entraînement. Elle a également pour objet un essuie-glace muni dudit dispositif, ainsi qu'un procédé de verrouillage du balai au bras.

Typiquement, un balai d'essuie-glace d'une vitre telle que le pare-brise d'un véhicule automobile comprend une lame d'essuyage, en général en caoutchouc, destinée à frotter contre la vitre du véhicule pour évacuer de l'eau en l'amenant en dehors du champ de vision du conducteur. Le balai comporte en outre une vertèbre longitudinale qui rigidifie la lame d'essuyage, de manière à favoriser l'application de cette lame sur le pare-brise, ainsi qu'une monture de support de la vertèbre et de la lame. Le balai comporte également un organe longitudinal de couverture comportant un déflecteur aérodynamique supérieur destiné à améliorer le plaquage du balai sur le pare-brise et donc la performance aérodynamique du système.

Le balai est rattaché à un bras d'entraînement, effectuant un mouvement de va-et-vient angulaire, par un ensemble constitué d'un connecteur mécanique et d'un adaptateur. Le connecteur est une pièce qui est fixée directement sur la structure du balai, l'adaptateur étant une pièce intermédiaire qui permet la liaison et la fixation du connecteur sur le bras d'entraînement. Ces deux pièces sont généralement reliées l'une à l'autre par un axe transversal qui autorise leur rotation relative.

L'assemblage et le désassemblage du balai au bras doit être simple et relativement rapide, la durée de l'assemblage n'excédant généralement pas une minute. Afin d'éviter un vol du balai lorsque celui-ci est assemblé au bras, il est souhaitable de verrouiller l'ensemble bras-balai. On peut par exemple souhaiter verrouiller la connexion bras-balai lorsque le conducteur n'est pas présent dans le véhicule et/ou quand le contact du véhicule n'est pas enclenché, puis déverrouiller la connexion bras-balai lorsque le conducteur est dans le véhicule et/ou que le contact du véhicule est enclenché.

Le document DE 10 2010 040881 A1 montre un dispositif de verrouillage d'un balai d'essuie-glace à un bras d'entraînement de l'état de la technique.

La présente invention permet d'atteindre ces objectifs en proposant un dispositif de verrouillage réversible d'un balai d'essuie-glace à un bras d'entraînement.

L'invention a ainsi pour objet un dispositif de verrouillage d'un balai d'essuie-glace à un bras d'entraînement. L'utilisation de l'électricité pour le chauffage de balais sur certains véhicules permet l'application présentée dans le cadre de l'invention.

Le dispositif selon l'invention comprend des moyens électriques aptes à entraîner un déplacement réversible d'au moins un élément de verrouillage solidaire du bras ou du balai, ledit au moins un élément de verrouillage se déplaçant par rapport au bras ou au balai duquel il est solidaire, entre une position de déverrouillage, dans laquelle ledit au moins un élément de verrouillage est solidaire du bras ou du balai seul, et une position de verrouillage, dans laquelle ledit au moins un élément est solidaire du bras et du balai.

Ainsi, avantageusement, l'utilisation d'un élément de verrouillage, déplaçable entre deux positions spécifiques, une dans laquelle il n'est solidaire que de l'une des deux pièces (bras ou balai) et l'autre dans laquelle il est solidaire des deux pièces (bras et balai), permet de verrouiller et de déverrouiller de manière réversible l'ensemble bras-balai.

Par « solidaire du bras ou du balai » au sens de l'invention, on entend que l'élément de verrouillage est en contact avec le bras ou le balai, de sorte que l'élément de verrouillage permet dans la position de verrouillage de bloquer au moins un degré de liberté du bras par rapport au balai et/ou du balai par rapport au bras. Dans la position de verrouillage, le bras et le balai sont ainsi liés mécaniquement via l'élément de verrouillage. D'autres moyens de verrouillage peuvent compléter le blocage des degrés de liberté qui ne seraient pas bloqués par l'élément de verrouillage dans la position de verrouillage.

Dans un premier mode de réalisation, les moyens électriques sont aptes à actionner en translation un piston, le déplacement dudit piston entraînant un déplacement dudit au moins un élément de verrouillage.

Ledit piston peut être le noyau d'un électroaimant, ledit noyau étant déplaçable en translation sous l'effet du champ magnétique produit par l'électroaimant.

Alternativement, ledit piston peut appartenir à un dispositif permettant de déplacer le piston sous l'action d'un courant électrique.

Dans la position de déverrouillage, ledit au moins un élément de verrouillage peut être solidaire d'un connecteur du balai et, dans la position de verrouillage, ledit au moins un élément de verrouillage peut être solidaire du connecteur et d'une pièce terminale du bras.

Dans un premier exemple du premier mode de réalisation, ledit au moins un élément de verrouillage comprend au moins une tige apte à s'engager dans la position de verrouillage dans une ouverture de ladite pièce terminale et à être maintenue à distance de ladite ouverture dans la position de déverrouillage.

Ladite ouverture est avantageusement circulaire.

Ladite au moins une tige peut être maintenue dans la position de déverrouillage à l'aide d'un élément de rappel

Ladite au moins une tige peut être déplaçable en translation selon une direction sensiblement orthogonale à la direction de déplacement du piston.

Ledit au moins un élément de verrouillage peut comprendre deux tiges alignées sensiblement orthogonalement à la direction de déplacement du piston et déplaçables par le piston dans deux directions opposées.

Le piston peut présenter une extrémité biseautée destinée à être en contact avec une extrémité desdites tiges dans la position de déverrouillage.

Dans la position de verrouillage, les deux tiges sont avantageusement en contact avec le piston.

Dans un deuxième exemple du premier mode de réalisation, ledit au moins un élément de verrouillage comprend un ressort à lames dont au moins une extrémité est apte à s'engager dans une ouverture de la pièce terminale du bras dans la position de verrouillage.

Ledit ressort peut être disposé sensiblement transversalement au piston, et est déplaçable en translation, à l'aide d'un actionneur solidaire du piston et monté sur au moins un rail, entre une position courbée du ressort formant position de déverrouillage, dans laquelle chaque extrémité du ressort est distante d'une ouverture de la pièce terminale, et une position déployée du ressort, formant position de verrouillage, dans laquelle chaque extrémité du ressort est engagée dans une ouverture de la pièce terminale.

Dans un troisième exemple du premier mode de réalisation, ledit au moins un élément de verrouillage comprend un arbre denté entraîné en rotation par une partie dentée du piston.

L'arbre denté peut comprendre deux extrémités allongées dépassant chacune d'une ouverture allongée de la pièce terminale du bras, et déplaçables sous l'action de la rotation de l'arbre denté entre une position de déverrouillage, dans laquelle l'axe longitudinal de chaque extrémité de l'arbre est sensiblement aligné avec l'axe longitudinal de chaque ouverture, et une position de verrouillage, dans laquelle l'axe longitudinal de chaque extrémité de l'arbre n'est pas aligné avec l'axe longitudinal de chaque ouverture, de manière à ce que chaque extrémité de l'arbre prenne appui sur la pièce terminale du bras.

Dans un quatrième exemple du premier mode de réalisation, le piston est solidaire du bras et, le bras étant apte à être monté et démonté, notamment à l'aide d'un clip, à un élément solidaire du balai, le piston est déplaçable entre une position de déverrouillage, dans laquelle le démontage est autorisé, et une position de verrouillage, dans laquelle le piston forme une butée empêchant le démontage.

Le clip peut comprendre un ergot monté sur une plate-forme amovible, par exemple pour être monté au bras via une ouverture du bras dans laquelle vient s'insérer l'ergot par déplacement de la plate-forme, et la plate-forme peut être munie d'un logement de réception du piston placé sous l'ergot, de manière à ce que le piston forme une butée de la plate-forme lorsqu'il est engagé dans ledit logement dans la position de verrouillage.

L'élément solidaire du balai peut être un adaptateur.

Dans un deuxième mode de réalisation, ledit au moins un élément de verrouillage comprend un bilame.

Le bilame peut être déformable sous l'effet d'une variation de température, par exemple par chauffage, à partir d'une position de verrouillage, dans laquelle il est solidaire d'une pièce terminale du bras et d'un adaptateur, jusqu'à une position de déverrouillage dans laquelle il est solidaire de la pièce terminale seule.

Les moyens électriques peuvent être aptes à chauffer le bilame.

Les moyens électriques peuvent être aptes à chauffer directement le bilame ou être aptes à chauffer le bilame via un élément chauffant disposé sur la pièce terminale.

L'invention a également pour objet un dispositif de verrouillage d'un balai d'essuie-glace à un bras d'entraînement, caractérisé en ce que le verrouillage est réalisé à l'aide de moyens d'aimantation solidaires du bras ou du balai et coopérant avec des moyens aptes à être aimantés et solidaires du balai ou du bras respectivement, et en ce que les moyens d'aimantation ou les moyens aptes à être aimantés sont montés à rotation dans le bras ou le balai duquel ils sont solidaires.

L'invention a également pour objet un essuie-glace comprenant un dispositif de verrouillage décrit ci-dessus.

L'invention a également pour objet un véhicule automobile.

Le véhicule automobile selon l'invention comprend un balai d'essuie-glace et un bras d'entraînement, un dispositif de verrouillage du balai au bras décrit ci-dessus, ainsi que des moyens d'activation du verrouillage et des moyens de détection de la présence d'un conducteur dans le véhicule et/ou de l'enclenchement d'un contact dans le véhicule, les moyens d'activation étant aptes à activer le verrouillage en cas de détection par les moyens de détection de la présence d'un conducteur dans le véhicule et/ou d'un démarrage du moteur du véhicule.

L'invention a enfin pour objet un procédé de verrouillage d'un balai d'essuie-glace à un bras d'entraînement, mettant en œuvre un dispositif décrit ci-dessus.

Le procédé peut comprendre une étape de verrouillage comprenant un déplacement dudit au moins un élément de verrouillage entre la position de déverrouillage et la position de verrouillage.

L'étape de verrouillage peut être mise en œuvre en cas de détection de la présence d'un conducteur dans le véhicule et/ou d'un démarrage du moteur du véhicule.

Le procédé peut également comprendre une étape de déverrouillage comprenant un déplacement dudit au moins un élément de verrouillage entre la position de verrouillage et la position de déverrouillage.

L'invention sera mieux comprise et d'autres détails, caractéristiques et avantages de l'invention apparaîtront à la lecture de la description suivante faite à titre d'exemple non limitatif et en référence aux dessins annexés dans lesquels :

- la figure 1 est une vue en perspective d'un balai d'essuie-glace relié à un bras porte-balai,
- la figure 2 est une vue schématique d'un essuie-glace,
- la figure 3 est une vue schématique d'un électroaimant,

- la figure 4A est une vue en coupe longitudinale partielle de l'électroaimant, dans une première position d'extrémité du noyau de l'électroaimant,
- la figure 4B est une vue en coupe longitudinale partielle de l'électroaimant, dans une deuxième position d'extrémité du noyau de l'électroaimant,
- la figure 5A illustre schématiquement une position de déverrouillage d'un dispositif de verrouillage selon l'invention, dans un premier exemple d'un premier mode de réalisation,
- la figure 5B illustre schématiquement une position de verrouillage d'un dispositif de verrouillage selon l'invention, dans un premier exemple d'un premier mode de réalisation,
- la figure 6A illustre schématiquement une position de déverrouillage d'un dispositif de verrouillage selon l'invention, dans un deuxième exemple du premier mode de réalisation,
- la figure 6B illustre schématiquement une position de verrouillage d'un dispositif de verrouillage selon l'invention, dans un deuxième exemple du premier mode de réalisation,
- la figure 7A illustre schématiquement une position de déverrouillage d'un dispositif de verrouillage selon l'invention, dans un troisième exemple du premier mode de réalisation,
- la figure 7B illustre schématiquement une position de verrouillage d'un dispositif de verrouillage selon l'invention, dans un troisième exemple du premier mode de réalisation,
- les figures 8A et 8B illustrent une carte électromécanique,
- la figure 9A illustre schématiquement une position de déverrouillage d'un dispositif de verrouillage selon l'invention, dans une variante du premier exemple du premier mode de réalisation,
- la figure 9B illustre schématiquement une position de verrouillage d'un dispositif de verrouillage selon l'invention, dans une variante du premier exemple du premier mode de réalisation,
- la figure 10A illustre schématiquement une position de déverrouillage d'un dispositif de verrouillage selon l'invention, dans une variante du deuxième exemple du premier mode de réalisation,
- la figure 10B illustre schématiquement une position de verrouillage d'un dispositif de verrouillage selon l'invention, dans une variante du deuxième exemple du premier mode de réalisation,
- la figure 11A illustre schématiquement une position de déverrouillage d'un dispositif de verrouillage selon l'invention, dans une variante du troisième exemple du premier mode de réalisation,
- la figure 11B illustre schématiquement une position de verrouillage d'un dispositif de verrouillage selon l'invention dans une variante du troisième exemple du premier mode de réalisation,
- la figure 12A illustre schématiquement une position de déverrouillage d'un dispositif de verrouillage selon l'invention, dans un quatrième exemple du premier mode de réalisation,
- la figure 12B illustre schématiquement une position de verrouillage d'un dispositif de verrouillage selon l'invention, dans un quatrième exemple du premier mode de réalisation,
- la figure 13 est une vue partielle en coupe transversale du dispositif de verrouillage des figures 12A et 12B,
- les figures 14A à 14C illustrent schématiquement un bilame, dans différentes configurations,
- les figures 15 et 16 sont des vues schématiques partielles d'un dispositif de verrouillage selon l'invention, dans un deuxième mode de réalisation,
- la figure 17A est une vue schématique partielle d'une position de verrouillage d'un dispositif de verrouillage selon l'invention, dans un deuxième mode de réalisation,
- la figure 17B est une vue schématique partielle d'une position de déverrouillage d'un dispositif de verrouillage selon l'invention, dans un deuxième mode de réalisation,
- la figure 18 est une vue schématique partielle d'une position de verrouillage d'un dispositif de verrouillage selon l'invention, dans une variante du deuxième mode de réalisation,
- la figure 19 est une vue schématique d'un dispositif de verrouillage selon l'invention, dans un troisième mode de réalisation,
- la figure 20 est une vue de détail du dispositif de la figure 19, et
- la figure 21 est une vue schématique d'un dispositif de verrouillage selon l'invention, dans une variante du troisième mode de réalisation.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur un bras porte-balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuie-glace, la dénomination inférieure contenant le plan du pare-brise.

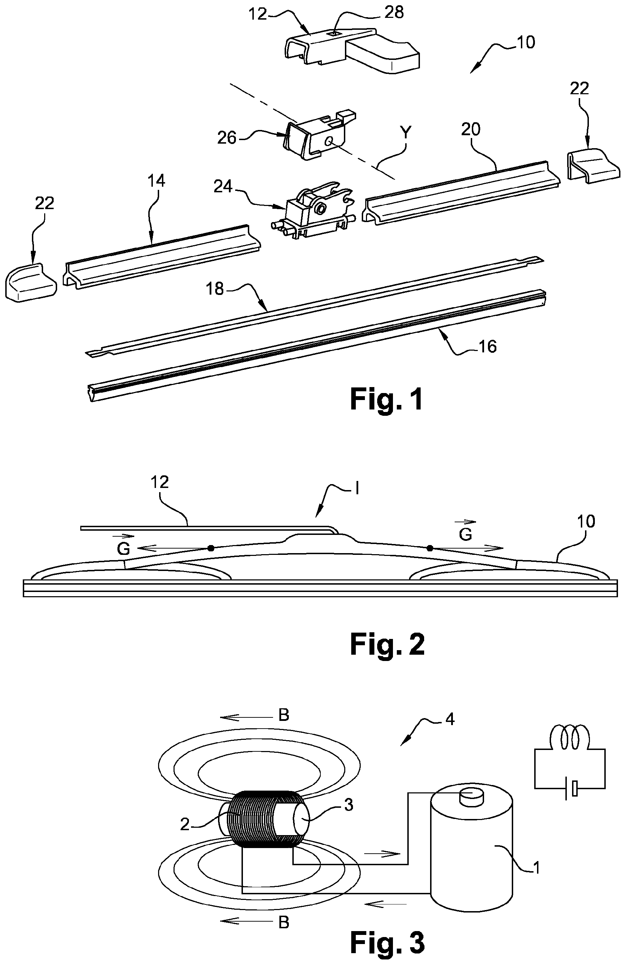

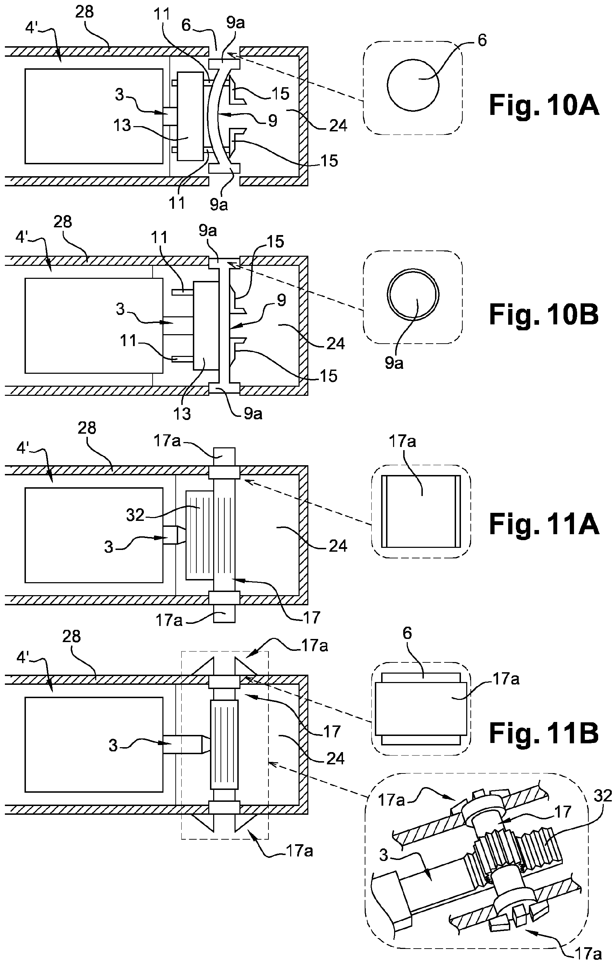

En référence aux figures 1 à 21, les éléments identiques ou fonctionnellement équivalents sont repérés par des chiffres de référence identiques.

Il est illustré à la figure 1 un essuie-glace, en particulier d'un pare-brise de véhicule automobile, cet essuie-glace comprenant un balai longitudinal 10 d'essuie-glace et un bras 12 porte-balai qui est partiellement représenté et destiné à être entraîné par un moteur pour suivre un mouvement angulaire de va-et-vient permettant d'évacuer l'eau et éventuellement d'autres éléments indésirables recouvrant le pare-brise.

Le balai 10 comprend ici un organe longitudinal de couverture 14, une lame longitudinale racleuse 16, en général en caoutchouc, et au moins une vertèbre longitudinale 18 qui confère une rigidification à la lame 16 de manière à favoriser l'application de cette lame 16 sur le pare-brise.

L'organe de couverture 14 du balai 10 comporte un déflecteur aérodynamique supérieur 20 destiné à améliorer le fonctionnement de l'essuie-glace, le but de ce déflecteur 20 étant d'améliorer le plaquage du balai 10 sur le pare-brise et donc la performance aérodynamique du système.

Le balai 10 comprend en outre des embouts ou agrafes d'accrochage 22 de la lame 16 et de la vertèbre 18 sur l'organe de couverture 14, ces agrafes 22 étant situées à chacune des extrémités longitudinales de l'organe de couverture 14.

L'organe de couverture 14 du balai est ici réalisé en deux parties indépendantes qui sont disposées sensiblement bout à bout et séparées l'une de l'autre par un connecteur 24 intermédiaire. Ce connecteur 24 est donc intercalé entre les deux parties de l'organe de couverture 14 et peut comprendre des moyens de raccordement fluidique de moyens d'alimentation en liquide lave glace du connecteur 24 à des conduites de l'organe 14.

Pour assurer son montage sur le bras 12, le balai 10 comprend un adaptateur 26 monté sur le connecteur 24 et permettant une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

Les balais actuels prenant de la valeur, il est souhaitable d'éviter le vol de ces balais, notamment en verrouillant le bras 12 au balai 10 dans une zone d'immobilisation I, avec une force de rétention G qui est typiquement supérieure à 100 N (figure 2). On peut par exemple verrouiller la connexion bras-balai lorsque le conducteur n'est pas présent dans le véhicule et/ou quand le contact du véhicule n'est pas enclenché, puis déverrouiller la connexion bras-balai lorsque le conducteur est dans le véhicule et/ou que le contact du véhicule est enclenché.

L'invention permet d'atteindre cet objectif, en utilisant des moyens électriques aptes à entraîner un déplacement réversible d'au moins un élément de verrouillage entre une position dite de déverrouillage, dans laquelle ledit au moins un élément n'assure pas le verrouillage du balai au bras, et une position dite de verrouillage, dans laquelle ledit au moins un élément assure le verrouillage du balai au bras.

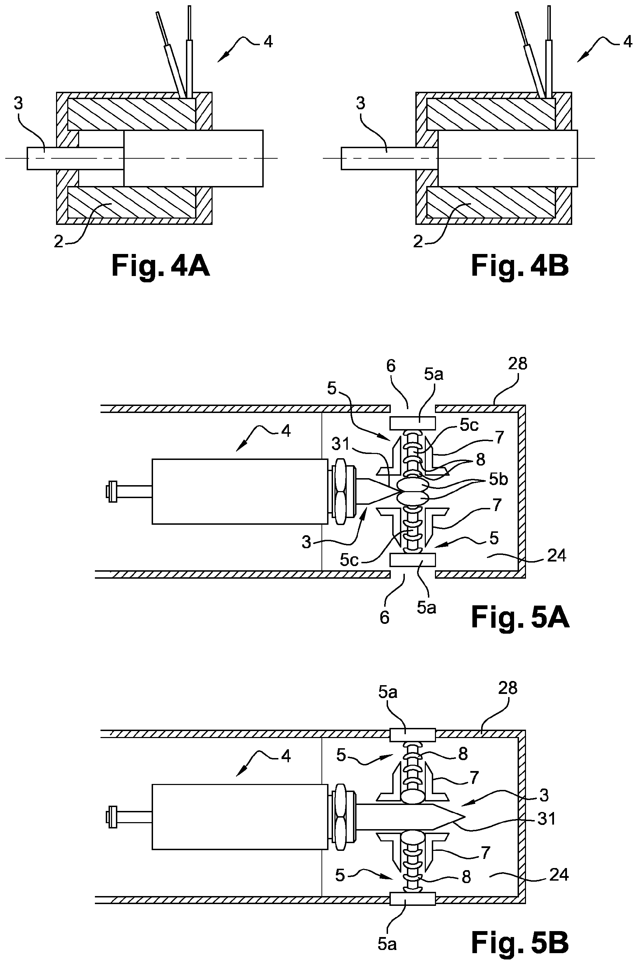

Un champ électromagnétique peut être utilisé pour bloquer le balai sur le bras, en particulier à l'aide d'un électroaimant qui est un organe produisant un champ magnétique lorsqu'il est alimenté en électricité. Le principe qui sous-tend ce premier mode de réalisation est illustré aux figures 3, 4A et 4B, qui représentent un électroaimant 4.

Un générateur de courant 1, tel qu'une pile, alimente en courant électrique un solénoïde 2. Un solénoïde est un dispositif constitué d'un fil électrique enroulé régulièrement en hélice de façon à former une bobine longue. Parcouru par un courant, il produit un champ magnétique B dans son voisinage, et plus particulièrement à l'intérieur de l'hélice où ce champ est quasiment uniforme. Les lignes de champ magnétique entraînent le déplacement d'un noyau 3 disposé à l'intérieur de la bobine 2. Ainsi, à partie d'une première position d'extrémité du noyau 3 (figure 4A), dans laquelle le noyau 3 est en position rentrée 2, par exemple sous l'action d'un ressort, non représenté, l'alimentation en courant de la bobine 2 va provoquer un déplacement du noyau 3 vers l'extérieur de la bobine 2, dans le sens indiqué par la flèche, jusqu'à une deuxième position d'extrémité dans laquelle le noyau 3 est en position sortie. Cette deuxième position d'extrémité du noyau 3 est illustrée à la figure 4B. Le noyau 3 peut être maintenu dans cette deuxième position d'extrémité, en l'absence de courant électrique parcourant la bobine 2, à l'aide d'un aimant permanent (non représenté). Le noyau 3 peut retrouver sa première position d'extrémité en inversant le sens du courant parcouru par la bobine 2.

Ainsi, dans un premier mode de réalisation, on utilise ces deux positions d'extrémité du noyau pour définir une position verrouillée et une position déverrouillée du bras et du balai. En particulier, la première position d'extrémité définit une position déverrouillée du bras et du balai, et la deuxième position d'extrémité définit une position verrouillée du bras et du balai.

Quatre exemples conformes à ce premier mode de réalisation vont maintenant être décrits. Dans ces exemples, le noyau 3 fait office de piston.

Dans un premier exemple, le verrouillage du balai au bras est réalisé à l'aide de deux tiges de verrouillage 5, solidaires d'un organe du balai, par exemple du connecteur 24, et sensiblement orthogonales au noyau 3 de l'électroaimant 4. Les tiges 5 sont déplaçables en translation à l'aide du noyau 3 entre une position de déverrouillage du dispositif et une position de verrouillage du dispositif dans laquelle les tiges 5 viennent obstruer chacune une ouverture 6 de la pièce terminale 28 du bras, ladite pièce terminale 28 étant couramment appelé chape. Dans cet exemple, l'électroaimant 4 peut être solidaire du bras.

Dans une position de déverrouillage, illustrée à la figure 5A, les tiges 5 sont maintenues en contact l'une contre l'autre à l'aide de ressorts 8. Le noyau 3 se trouve dans sa première position d'extrémité (position rentrée), décrite ci-dessus et illustrée à la figure 4A. La position déverrouillée implique donc le passage d'un courant dans l'électroaimant 4, de manière à produire un champ magnétique qui place le noyau 3 dans sa première position d'extrémité. L'axe longitudinal des tiges 5A est sensiblement orthogonal à celui du noyau 3. Les tiges 5 sont munies du côté du centre du connecteur 24 d'une extrémité 5a de forme arrondie, par exemple de section circulaire ou ovale. Le noyau 3 de l'électroaimant 4 présente une extrémité biseautée 31 apte à s'insérer lors de son déplacement vers sa deuxième position d'extrémité (position sortie) entre les extrémités 5a des tiges 5, la forme biseautée permettant d'écarter les deux extrémités 5a l'une de l'autre lors du début du déplacement du noyau 3. Les tiges 5 sont guidées en translation par des moyens de guidage 7. Les éléments de rappel 8 peuvent être disposés autour des tiges 5. Les tiges 5 sont munies du côté de la chape 28 d'une extrémité élargie 5b apte à s'insérer dans une ouverture 6 de la chape 28. Chaque tige 5 comprend ainsi une partie centrale 5c, une extrémité 5a distante de l'ouverture 6 associée à la tige 5 et une extrémité 5b de plus grande section que la partie centrale 5c et destinée à être engagée dans l'ouverture 6. Chaque extrémité 5c est de section sensiblement identique à celle de l'ouverture 6 dans laquelle elle s'engage. Chaque ouverture 6 peut présenter tout type de contour, avantageusement un contour circulaire.

La figure 5B illustre la position de verrouillage du dispositif. Le noyau 3 est dans sa deuxième position d'extrémité, décrite ci-dessus et illustrée à la figure 4B. Le déplacement du noyau 3 hors de l'électroaimant 4 a entraîné le déplacement radial des tiges 5, les extrémités 5a des tiges 5 situées du côté de la chape 28 obstruant les ouvertures 6 de la chape 28, ce qui assure le verrouillage de la chape 28 au connecteur 24, le connecteur 24 ne pouvant plus se déplacer longitudinalement par rapport à la chape 28. Les éléments de rappel 8 et le noyau 3 disposé entre les tiges 5 empêchent en outre un déplacement radial des tiges 5. Dans la position de verrouillage, l'électroaimant 4 n'est pas alimenté en courant électrique, de manière à placer le noyau 3 dans sa deuxième position d'extrémité.

Dans ce premier exemple, le dispositif permet une sécurisation (verrouillage) du bras au balai dans la position de verrouillage et une rotation du balai par rapport au bras, par exemple selon l'axe Y de la figure 1, dans la position de déverrouillage.

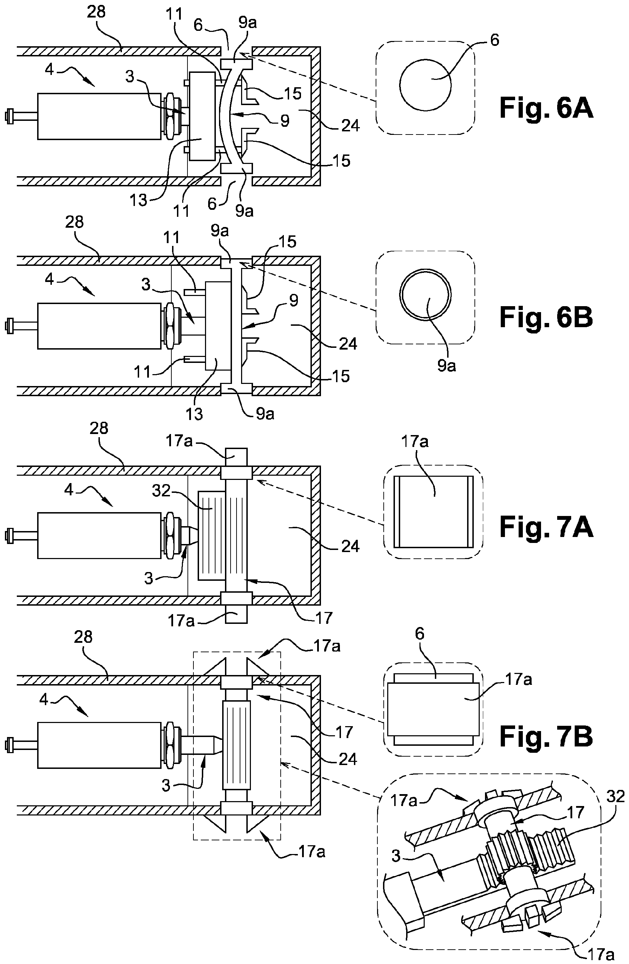

Dans un deuxième exemple, on utilise à la place des tiges 5 un ressort à lames 9, solidaire d'un organe du balai, par exemple du connecteur 24, et qui exerce une force de rappel longitudinalement à l'électroaimant 4 et à son noyau 3. Le ressort à lames 9 est disposé sensiblement orthogonalement au noyau 3. Dans une position de déverrouillage, illustrée à la figure 6A, le ressort à lames 9 est dans sa position courbée, au repos. Le noyau 3 de l'électroaimant 4 est relié à un actionneur 13 déplaçable en translation sur des rails 11. Le noyau 3 se trouve dans sa première position d'extrémité, décrite ci-dessus et illustrée à la figure 4A. La position de déverrouillage implique donc le passage d'un courant dans l'électroaimant 4, de manière à produire un champ magnétique qui place le noyau 3 dans sa première position d'extrémité. Le ressort 9 est dans sa position courbée, dans laquelle ses extrémités 9a ne sont pas engagées dans les ouvertures 6 de la chape 28.

Le déplacement du noyau 3 jusqu'à sa deuxième position d'extrémité va entraîner en translation l'actionneur 13 qui va déformer le ressort 9 jusqu'à une position déployée, dans laquelle le ressort 9 est sensiblement rectiligne, et dans laquelle les extrémités 9a du ressort 9 sont engagées dans les ouvertures 6 de la chape 28 (Figure 6B). Le ressort 9 est alors bloqué longitudinalement et radialement par l'actionneur 13 et par une butée arrière 15. Dans cette position de verrouillage, l'électroaimant 4 n'est pas alimenté en courant électrique, de manière à placer le noyau 3 dans sa deuxième position d'extrémité.

Dans ce deuxième exemple, le dispositif permet une sécurisation (verrouillage) du bras au balai dans la position de verrouillage et une rotation du balai par rapport au bras, par exemple selon l'axe Y de la figure 1, dans la position de déverrouillage.

Dans un troisième exemple, le noyau 3 comprend une extrémité crénelée (dentée) 32 définissant un engrenage avec un arbre denté 17. L'arbre denté 17 traverse deux ouvertures 6 allongées, par exemple de sections rectangulaires, de la chape 28 et comprend deux extrémités allongées 17a dépassant chacune d'une ouverture 6.

Dans la position de déverrouillage illustrée à la figure 7A, le noyau 3 se trouve dans sa première position d'extrémité, décrite ci-dessus et illustrée à la figure 4A. La position déverrouillée implique donc le passage d'un courant dans l'électroaimant 4, de manière à produire un champ magnétique qui place le noyau 3 dans sa première position d'extrémité. Dans cette position de déverrouillage, le noyau 3 coopère avec l'arbre denté 17 de manière à ce que les deux extrémités 17a situées en dehors de la chape présentent sensiblement la même section que celle des ouvertures 6.

Le déplacement du noyau 3 jusqu'à sa deuxième position d'extrémité va entraîner en rotation l'arbre denté 17 jusqu'à la position de verrouillage (figure 7B). Dans cette position de verrouillage, chaque extrémité 17a, du fait de sa forme allongée et de sa rotation par rapport à la position de déverrouillage, ne coïncide plus avec son ouverture 6 associée et déborde de l'ouverture 6 de part et d'autre des plus grand côtés de l'ouverture 6. Ainsi, chaque extrémité 17a est en appui contre la chape 28 ce qui permet le verrouillage de l'arbre 17 à la chape 28.

L'engrenage est de préférence configuré pour que le passage de la première position d'extrémité du noyau 3 à sa deuxième position d'extrémité entraîne une rotation d'environ 90° de l'arbre denté 17.

Dans ce troisième exemple, le dispositif permet une sécurisation (verrouillage) du bras au balai dans la position de verrouillage et une rotation du balai par rapport au bras, par exemple selon l'axe Y de la figure 1, dans la position de déverrouillage.

Dans une variante du premier mode de réalisation, l'électroaimant 4 est remplacé par une carte électromécanique 4'. La carte électromécanique 4' permet de déplacer le piston 3 sous l'action d'un courant électrique.

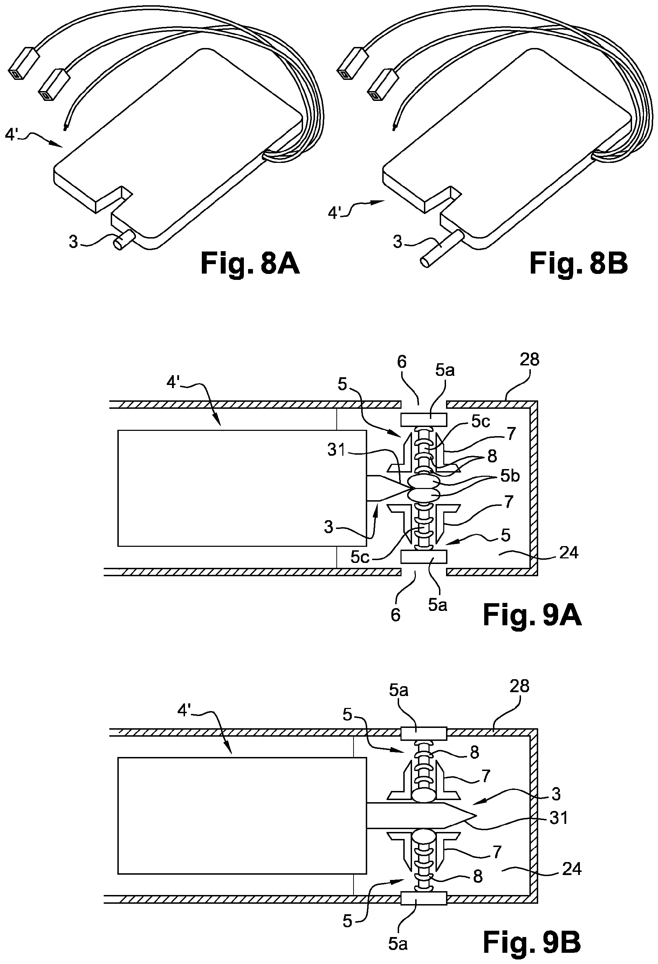

Par analogie avec les figures 4A et 4B, à partir d'une première position d'extrémité du piston 3 (figure 8A), dans laquelle le piston 3 est situé partiellement à l'extérieur de la carte 4', grâce à l'alimentation en courant de la carte 4'. L'arrêt de l'alimentation électrique de la carte électromécanique 4' va provoquer un déplacement du piston 3 vers l'extérieur de la carte 4', jusqu'à une deuxième position d'extrémité. Cette deuxième position d'extrémité du vérin 3 est illustrée à la figure 8B.

Les trois exemples conformes à cette variante de réalisation sont illustrés aux figures 9A,9B ; 10A,10B et 11A, 11B. Ils sont identiques aux trois exemples illustrés aux figures 5A,5B ; 6A,6B et 7A,7B respectivement, à la différence près que l'électroaimant 4 a été remplacé par la carte électromécanique 4'. Dans ces trois exemples, le dispositif permet une sécurisation (verrouillage) du bras au balai dans la position de verrouillage et une rotation du balai par rapport au bras, par exemple selon l'axe Y de la figure 1, dans la position de déverrouillage.

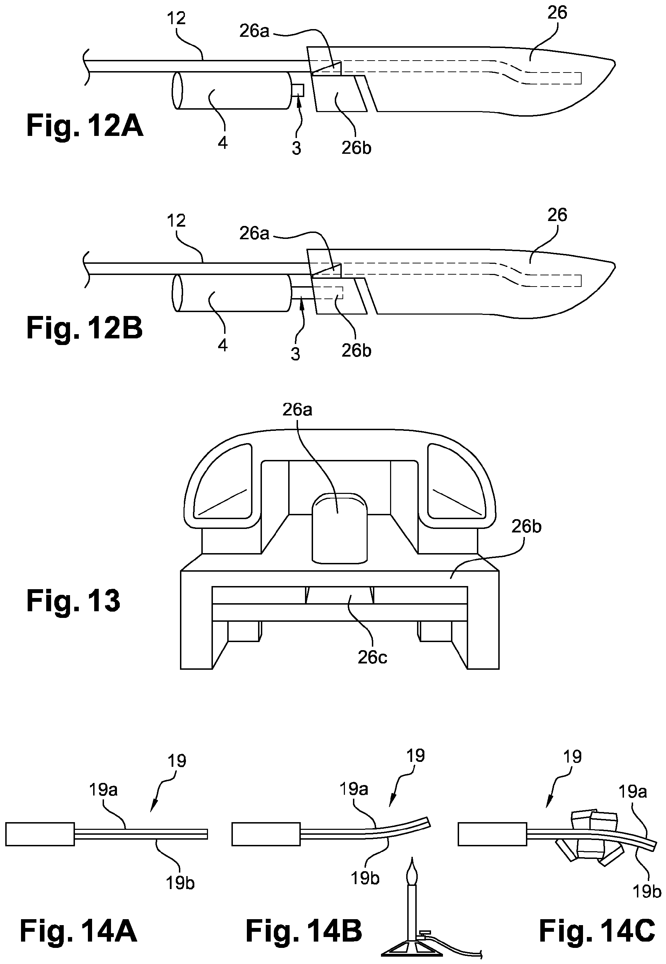

Dans un quatrième exemple de ce premier mode de réalisation, c'est le piston 3 lui-même qui constitue l'élément de verrouillage. Dans la position de déverrouillage illustrée à la figure 12A, le piston 3 se trouve dans sa première position d'extrémité, décrite ci-dessus et illustrée à la figure 4A. Un adaptateur 26 solidaire du balai comprend un système de clippage permettant de solidariser le bras 12 à l'adaptateur 26. L'adaptateur comprend ainsi un ergot 26a destiné à être inséré dans une ouverture du bras 12 (figure 13). L'ergot 26a est disposé sur une plate-forme amovible 26b qui descend au fur et à mesure que le bras 12 appuie sur l'ergot 26a lors de l'insertion du bras 12 dans l'adaptateur 26, jusqu'à ce que l'ergot 26a se loge dans l'ouverture du bras 12, ce qui entraîne la solidarisation du bras 12 à l'adaptateur 26. Le bras 12 peut être désolidarisé ultérieurement de l'adaptateur 26 en abaissant la plate-forme 26b, par exemple manuellement, de manière à dégager l'ergot 26a du bras 12. La plate-forme 26b est munie d'un logement inférieur 26c, disposé sous l'ergot 26a, et dans lequel va se loger le piston 3 lorsqu'il atteint sa deuxième position d'extrémité (figure 12B). Ainsi, lorsque le piston 3 est logé dans le logement 26c, il n'est plus possible d'abaisser la plate-forme 26b pour dégager l'ergot 26a de l'ouverture du bras 12 : le piston 3 constitue une butée inférieure de la plate-forme 26b et le verrouillage est donc assuré.

En variante, l'électroaimant 4 peut être remplacé par une carte électromécanique, tel que décrit ci-dessus.

Dans ce quatrième exemple, le dispositif permet une sécurisation (verrouillage) du bras au balai dans la position de verrouillage.

Dans un deuxième mode de réalisation du dispositif de verrouillage selon l'invention, l'élément de verrouillage est un bilame. Un bilame est un élément comprenant deux lames de métaux ou d'alliages différents, de dilatations thermiques différentes. La dilatation des deux lames étant différente, le bilame se déforme avec les variations de température. Les lames, généralement souples, sont soudées, par exemple par laminage à froid, ou collées l'une contre l'autre, dans le sens de la longueur.

Ce principe est illustré aux figures 14A à 14C. La figure 14A illustre un bilame 19 au repos. Le bilame 19 comprend une couche supérieure 19a, par exemple en acier, et une couche inférieure 19b, par exemple en cuivre. Sous l'action d'une élévation de température, l'acier 19a se dilate davantage que le cuivre 19b et le bilame 19 se déforme vers le haut (figure 14B). Sous l'action d'une diminution de température, le cuivre 19b se contracte davantage que l'acier 19a et le bilame 19 se déforme vers le bas (figure 14C).

Les déformations et les forces développées peuvent être calculées à partir des paramètres de chaque composé et de la variation de température. La déviation de l'élément bimétallique est donnée par l'équation suivante:

$$\delta = \frac{(V.L^2.\Delta T)}{2.e}$$

dans laquelle :

- $\delta$ désigne la déviation de l'élément bimétallique (m),
- V désigne la courbure spécifique (K$^{-1}$),
- L désigne la longueur de l'élément bimétallique (m),
- $\Delta T$ désigne la variation de température (K),
- e désigne l'épaisseur de l'élément bimétallique (m).

La courbure spécifique est donnée par la relation:

$$V = \frac{2}{3} \cdot \frac{\alpha_2 - \alpha_1}{1 + \frac{(E_1.e_1^2 - E_2.e_1^2)^2}{4.E_1.e_1.E_2.e_2.e^2}}$$

dans laquelle :

- V désigne la courbure spécifique (K$^{-1}$)
- $E_1$ & $E_2$ désignent les modules d'élasticité de chaque matériau dans l'intervalle de température (Pa),

- $\alpha_1$ & $\alpha_2$ désignent les coefficients de dilatation thermique de chaque matériau ($K^{-1}$).
- $e = e_1 + e_2$ désigne l'épaisseur de l'élément bimétallique (m),
- $e_1$ & $e_2$ désigne l'épaisseur de chaque matériau (m).

Si $E_1.e_1^2 - E_2.e_2^2 = 0$, la valeur maximale de V est atteinte, de sorte que:

$$\frac{e_1}{e_2} = \sqrt{\frac{E_2}{E_1}}$$

Ce rapport permet de déduire les dimensions optimales de l'élément bimétallique et les matériaux utilisés pour obtenir les déviations et les efforts maximaux.

Dans ce cas, les matériaux doivent être choisis selon :

- leur utilisation en micro-fabrication,
- leur qualité de conducteur électrique, de manière à être chauffés par effet Joule,
- leur plus grand coefficient de dilatation thermique.

En effet, le rapport optimum de l'épaisseur des matériaux pour un effort et une déviation maximaux, est obtenu à partir des modules d'Young de chaque matériau. En prenant par exemple comme matériaux de l'aluminium, qui est le matériau le matériau le plus utilisé en micro-fabrication et du silicium, avec lequel l'aluminium présente la plus grande différence en termes de coefficient de dilatation thermique :

$$\frac{e_{Al}}{e_{Si}} = \sqrt{\frac{E^{Si}}{E^{Al}}}$$

$$e_{Al} = e_{Si}\sqrt{\frac{E^{Si}}{E^{Al}}}$$

$$e_{Al} = 1,27.e_{Si}$$

On peut ainsi dimensionner l'épaisseur de l'élément bimétallique.

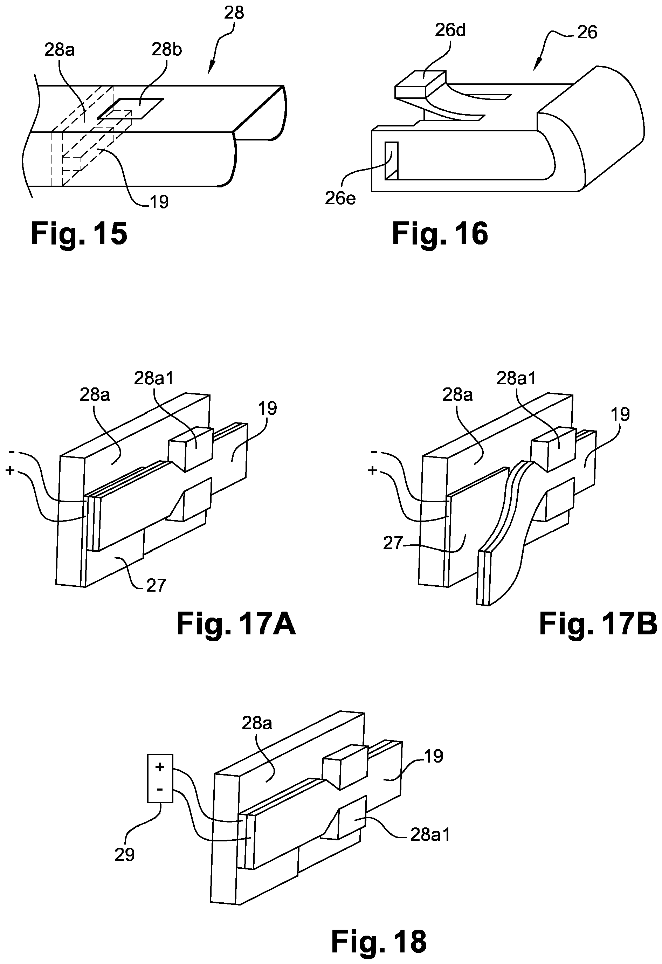

Dans la position de déverrouillage, le bilame peut être solidaire du bras de l'essuie-glace. Tel qu'illustré à la figure 15, le bilame 19 est disposé sur un support 28a de la chape 28 du bras. La chape 28 comprend en outre une ouverture destinée à accueillir un ergot 26d de clippage de l'adaptateur 26 (figure 16). L'adaptateur 26 comprend deux orifices latéraux 26e, chaque orifice latéral 26e accueillant une extrémité longitudinale du bilame 19. Ainsi, en position de verrouillage, le bilame 19 est solidaire du bras, via le support 28a, et également solidaire du balai, via les orifices latéraux de l'adaptateur 26.

Une extrémité du bilame 19 peut être en contact thermique avec une pièce chauffante 27, par exemple une résistance chauffante, qui peut être disposée sur le support 28a de la chape 28. Dans la position de verrouillage illustrée à la figure 17A, la pièce chauffante 27, qui est solidarisée au support 28a à l'aide d'un élément d'accroché 28a1 en saillie du support 28, n'est pas alimentée électriquement. La pièce chauffante 27 ne dégage donc pas de chaleur et par suite le bilame 19 n'est pas déformé. Lorsque la pièce chauffante 27 est alimentée électriquement, elle dégage de la chaleur. L'extrémité du bilame 19 en contact thermique avec la pièce chauffante 27 va alors se déformer et par suite se désengager de l'orifice 26e de l'adaptateur 26. La position de déverrouillage est atteinte (figure 17B).

En variante, tel qu'illustré à la figure 18, la pièce chauffante peut être remplacée par un chauffage direct du bilame 19 à l'aide d'une alimentation électrique 29.

Dans ce deuxième mode de réalisation, le dispositif permet une sécurisation (verrouillage) du bras au balai dans la position de verrouillage.

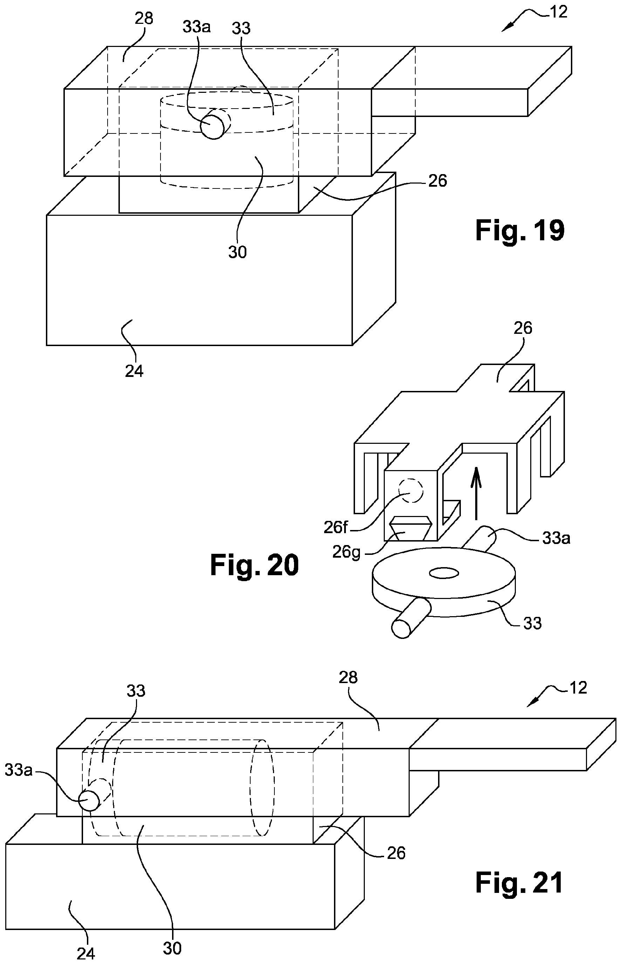

Dans un troisième mode de réalisation, le verrouillage est réalisé à l'aide de moyens d'aimantation solidaires du bras ou du balai et coopérant avec des moyens aptes à être aimantés et solidaires du balai ou du bras respectivement, et les moyens d'aimantation ou les moyens aptes à être aimantés sont montés à rotation dans le bras ou le balai duquel ils sont solidaires. Ce mode de réalisation est illustré aux figures 19 à 21.

Le dispositif de verrouillage peut ainsi comprendre un électroaimant 30, solidaire du connecteur 24, et destiné à aimanter une pièce métallique 33 qui est montée à rotation dans l'adaptateur 26 à l'aide d'un arbre de rotation 33a. L'adaptateur 26 est solidaire de la chape 28 du bras 12 (figure 19). Le verrouillage est obtenu en activant l'électroaimant 30 qui va aimanter la pièce 33. Le plan de la surface d'aimantation de l'électroaimant 30 et de la pièce métallique 33 est sensiblement parallèle au plan du bras 12.

Le dispositif de verrouillage peut ainsi être monté verticalement pour obtenir la configuration de la figure 19. La pièce métallique 33 est insérée dans l'adaptateur 26, l'arbre 33a étant disposé à chacune de ses extrémités dans un logement 26f de l'adaptateur (figure 20). L'adaptateur 26 est ensuite solidarisé à la chape 28 du bras 12, par exemple par clippage à l'aide d'un élément 26g en saillie de l'adaptateur 26. L'assemblage et le verrouillage du bras 12 au balai est alors réalisé par aimantation de la pièce métallique 33 par l'électroaimant 30. La présence de l'arbre de rotation 33 permet avantageusement la rotation relative du bras 12 et du balai.

En variante, tel qu'illustré à la figure 21, la pièce métallique 33 et la surface d'aimantation de l'électroaimant 30 sont disposées sensiblement perpendiculairement au plan du bras 12, ce qui permet un montage horizontal du dispositif de verrouillage. L'électroaimant 30 est solidaire du connecteur 24, la surface d'aimantation de l'électroaimant 30 étant disposée perpendiculairement à la surface supérieure du connecteur 24. La pièce métallique 33 est insérée dans l'adaptateur 26, l'arbre 33a étant disposé à chacune de ses extrémités dans un logement 26f de l'adaptateur (figure 20). L'adaptateur 26 est ensuite solidarisé à la chape 28 du bras 12, par exemple par clippage. L'assemblage et le verrouillage du bras 12 au balai est alors réalisé par aimantation de la pièce métallique 33 par l'électroaimant 30.

Dans ce troisième mode de réalisation, le dispositif permet une sécurisation (verrouillage) du bras au balai dans la position de verrouillage et une rotation du balai par rapport au bras, par exemple selon l'axe Y de la figure 1, dans la position de déverrouillage.

## Revendications

1. Dispositif de verrouillage d'un balai (10) d'essuie-glace à un bras d'entraînement (12), **caractérisé en ce qu'**il comprend des moyens électriques (4,4',29) aptes à entraîner un déplacement réversible d'au moins un élément de verrouillage (3,5,9,17,19) solidaire du bras (12) ou du balai (10), ledit au moins un élément de verrouillage (3,5,9,17,19) se déplaçant par rapport au bras (12) ou au balai (10) duquel il est solidaire, entre une position de déverrouillage, dans laquelle ledit au moins un élément de verrouillage (3,5,9,17,19) est solidaire du bras (12) ou du balai (10) seul, et une position de verrouillage, dans laquelle ledit au moins un élément (3,5,9,17,19) est solidaire du bras (12) et du balai (10).

2. Dispositif selon la revendication 1, **caractérisé en ce que** les moyens électriques (4,4') sont aptes à actionner en translation un piston (3), le déplacement dudit piston (3) entraînant un déplacement dudit au moins un élément de verrouillage (3,5,9,17).

3. Dispositif selon la revendication 2, **caractérisé en ce que** ledit piston (3) est le noyau d'un électroaimant (4), ledit noyau (3) étant déplaçable en translation sous l'effet du champ magnétique produit par l'électroaimant (4).

4. Dispositif selon la revendication 2, **caractérisé en ce que** ledit piston (3) appartient à un dispositif (4') permettant de déplacer le piston (3) sous l'action d'un courant électrique.

5. Dispositif selon l'une des revendications 2 à 4, **caractérisé en ce que**, dans la position de déverrouillage, ledit au moins un élément de verrouillage (3,5,9,17) est solidaire d'un connecteur (24) du balai (10) et **en ce que**, dans la position de verrouillage, ledit au moins un élément de verrouillage (3,5,9,17) est solidaire du connecteur (24) et d'une pièce terminale (28) du bras (12).

6. Dispositif selon la revendication 5, **caractérisé en ce que** ledit au moins un élément de verrouillage (3,5,9,17) comprend au moins une tige (5) apte à s'engager dans la position de verrouillage dans une ouverture (6) de ladite pièce terminale (28) et à être maintenue à distance de ladite ouverture (6) dans la position de déverrouillage, ladite au moins une tige (5) étant de préférence maintenue dans la position de déverrouillage à l'aide d'un élément de rappel (7).

7. Dispositif selon l'une des revendications 6, **caractérisé en ce que** ladite au moins une tige (5) est déplaçable en translation selon une direction sensiblement orthogonale à la direction de déplacement du piston (3).

8. Dispositif selon la revendication 5, **caractérisé en ce que** ledit au moins un élément de verrouillage (3,5,9,17) comprend un ressort à lames (9) dont au moins une extrémité (9a) est apte à s'engager dans une ouverture (6) de la pièce terminale (28) du bras (12) dans la position de verrouillage.

9. Dispositif selon la revendication 5, **caractérisé en ce que** ledit au moins un élément de verrouillage (3,5,9,17) comprend un arbre denté (17) entraîné en rotation par une partie dentée (32) du piston (3).

10. Dispositif selon l'une des revendications 1 à 4, **caractérisé en ce que** le piston (3) est solidaire du bras (12) et **en ce que**, le bras (12) étant apte à être monté et démonté à un élément (26) solidaire du balai (10), le piston (3) est déplaçable entre une position de déverrouillage, dans laquelle le démontage est autorisé, et une position de verrouillage, dans laquelle le piston (3) forme une butée empêchant le démontage, l'élément solidaire (26) du balai (10) étant de préférence un adaptateur.

11. Dispositif selon la revendication 10, **caractérisé en ce que** le bras (12) est apte à être monté et démonté à l'élément (26) solidaire du balai (10) à l'aide d'un clip (26a,26b), le clip comprenant un ergot (26a) monté sur une plate-forme (26b) amovible, et **en ce que** la plate-forme (26b) est munie d'un logement (26c) de réception du piston (3) placé sous l'ergot (26a), de manière à ce que le piston (3) forme une butée de la plate-forme (26b) lorsqu'il est engagé dans ledit logement (26c) dans la position de verrouillage.

**12.** Dispositif selon la revendication 1, **caractérisé en ce que** ledit au moins un élément de verrouillage (3,5,9,17,19) comprend un bilame (19), lesdits moyens électriques (29) étant de préférence aptes à chauffer le bilame (19).

**13.** Dispositif selon la revendication 12, **caractérisé en ce que** le bilame (19) est déformable sous l'effet d'une variation de température, à partir d'une position de verrouillage, dans laquelle il est solidaire d'une pièce terminale (28) du bras (12) et d'un adaptateur (26), jusqu'à une position de déverrouillage dans laquelle il est solidaire de la pièce terminale (28) seule.

**14.** Essuie-glace, **caractérisé en ce qu'**il comprend un dispositif de verrouillage selon l'une des revendications 1 à 13.

**15.** Véhicule automobile, **caractérisé en ce qu'**il comprend un balai d'essuie-glace (10) et un bras d'entraînement (12), un dispositif de verrouillage du balai (10) au bras (12) selon l'une des revendications 1 à 13, ainsi que des moyens d'activation du verrouillage et des moyens de détection de la présence d'un conducteur dans le véhicule et/ou de l'enclenchement d'un contact dans le véhicule, les moyens d'activation étant aptes à activer le verrouillage en cas de détection par les moyens de détection de la présence d'un conducteur dans le véhicule et/ou d'un démarrage du moteur du véhicule.

**Patentansprüche**

**1.** Vorrichtung zum Verriegeln eines Wischerblatts (10) eines Scheibenwischers an einem Antriebsarm (12), **dadurch gekennzeichnet, dass** sie elektrische Mittel (4, 4', 29) aufweist, die ausgebildet sind zum Bewirken einer reversiblen Verschiebung von mindestens einem Verriegelungselement (3, 5, 9, 17, 19), das mit dem Arm (12) oder dem Wischerblatt (10) verbunden ist, wobei das mindestens eine Verriegelungselement (3, 5, 9, 17, 19) sich relativ zu dem Arm (12) oder dem Wischerblatt (10), mit dem es verbunden ist, zwischen einer Entriegelungsposition, in der das mindestens eine Verriegelungselement (3, 5, 9, 17, 19) nur mit dem Arm (12) oder dem Wischerblatt (10) verbunden ist, und einer Verriegelungsposition, in der das mindestens eine Element (3, 5, 9, 17, 19) mit dem Arm (12) und dem Wischerblatt (10) verbunden ist, verschiebt.

**2.** Vorrichtung nach Anspruch 1, **dadurch gekennzeichnet, dass** die elektrischen Mittel (4, 4') ausgebildet sind zum Betätigen eines Kolbens (3) in einer Translationsbewegung, wobei die Verschiebung des Kolbens (3) eine Verschiebung des mindestens einen Verriegelungselements (3, 5, 9, 17) bewirkt.

**3.** Vorrichtung nach Anspruch 2, **dadurch gekennzeichnet, dass** der Kolben (3) der Kern eines Elektromagneten (4) ist, wobei der Kern (3) unter der Wirkung des vom Elektromagneten (4) erzeugten Magnetfelds in einer Translationsbewegung verschiebbar ist.

**4.** Vorrichtung nach Anspruch 2, **dadurch gekennzeichnet, dass** der Kolben (3) zu einer Vorrichtung (4') gehört, die das Verschieben des Kolbens (3) unter der Wirkung eines elektrischen Stroms ermöglicht.

**5.** Vorrichtung nach einem der Ansprüche 2 bis 4, **dadurch gekennzeichnet, dass** in der Entriegelungsposition das mindestens eine Verriegelungselement (3, 5, 9, 17) mit einem Stecker (24) des Wischerblatts (10) verbunden ist, und dadurch, dass in der Verriegelungsposition das mindestens eine Verriegelungselement (3, 5, 9, 17) mit dem Stecker (24) und einem Endstück (28) des Arms (12) verbunden ist.

**6.** Vorrichtung nach Anspruch 5, **dadurch gekennzeichnet, dass** das mindestens eine Verriegelungselement (3, 5, 9, 17) mindestens eine Stange (5) aufweist, die ausgebildet ist zum Eingreifen in eine Öffnung (6) des Endstücks (28) in der Verriegelungsposition, und zum Beibehalten in einem Abstand von der Öffnung (6) in der Entriegelungsposition, wobei die mindestens eine Stange (5) vorzugsweise mithilfe eines Rückstellelements (7) in der Entriegelungsposition gehalten wird.

**7.** Vorrichtung nach Anspruch 6, **dadurch gekennzeichnet, dass** die mindestens eine Stange (5) in einer Translationsbewegung in eine Richtung verschiebbar ist, die im Wesentlichen orthogonal zur Bewegungsrichtung des Kolbens (3) verläuft.

**8.** Vorrichtung nach Anspruch 5, **dadurch gekennzeichnet, dass** das mindestens eine Verriegelungselement (3, 5, 9, 17) eine Blattfeder (9) aufweist, von der mindestens ein Ende (9a) ausgebildet ist zum Eingreifen in eine Öffnung (6) des Endstücks (28) des Arms (12) in der Verriegelungsposition.

**9.** Vorrichtung nach Anspruch 5, **dadurch gekennzeichnet, dass** das mindestens eine Verriegelungselement (3, 5, 9, 17) eine Zahnwelle (17) aufweist, die durch einen gezahnten Bereich (32) des Kolbens (3) in Drehung versetzt wird.

**10.** Vorrichtung nach einem der Ansprüche 1 bis 4, **dadurch gekennzeichnet, dass** der Kolben (3) mit dem Arm (12) verbunden ist, und dadurch, dass der Arm (12) ausgebildet ist zum Montieren und Demontieren an/von einem mit dem Wischerblatt (10) verbundenem Element (26), wobei der Kolben (3) zwischen einer Entriegelungsposition, in der die Demontage zulässig ist, und einer Verriegelungsposition, in der der Kolben (3) einen Anschlag bildet, der die Demontage verhindert, verschiebbar ist, wobei das mit dem Wischerblatt (10) verbundene Element (26) vorzugsweise ein Adapter ist.

11. Vorrichtung nach Anspruch 10, **dadurch gekennzeichnet, dass** der Arm (12) ausgebildet ist zum Montieren und Demontieren an/von dem mit dem Wischerblatt (10) verbundenem Element (26) mithilfe einer Klammer (26a, 26b), wobei die Klammer einen Zapfen (26a) aufweist, der auf einer beweglichen Plattform (26b) montiert ist, und dadurch, dass die Plattform (26b) mit einem Sitz (26c) zur Aufnahme des Kolbens (3) ausgestattet ist, der sich unterhalb des Zapfens (26a) befindet, damit der Kolben (3) einen Anschlag der Plattform (26b) bildet, wenn er in der Verriegelungsposition in den Sitz (26c) eingreift.

12. Vorrichtung nach Anspruch 1, **dadurch gekennzeichnet, dass** das mindestens eine Verriegelungselement (3, 5, 9, 17, 19) einen Bimetallstreifen (19) aufweist, wobei die elektrischen Mittel (29) vorzugsweise ausgebildet sind zum Heizen des Bimetallstreifens (19).

13. Vorrichtung nach Anspruch 12, **dadurch gekennzeichnet, dass** der Bimetallstreifen (19) unter der Wirkung einer Temperaturänderung aus einer Verriegelungsposition, in der er mit einem Endstück (28) des Arms (12) und einem Adapter (26) verbunden ist, bis in eine Entriegelungsposition, in der er nur mit dem Endstück (28) verbunden ist, verformt werden kann.

14. Scheibenwischer, **dadurch gekennzeichnet, dass** er eine Verriegelungsvorrichtung nach einem der Ansprüche 1 bis 13 aufweist.

15. Kraftfahrzeug, **dadurch gekennzeichnet, dass** es ein Wischerblatt (10) und einen Antriebsarm (12) aufweist, eine Vorrichtung zum Verriegeln des Wischerblatts (10) am Arm (12) nach einem der Ansprüche 1 bis 13, sowie Mittel zum Aktivieren der Verriegelung und Mittel zum Erkennen des Vorhandenseins eines Fahrers im Fahrzeug und/oder des Auslösens eines Kontakts im Fahrzeug, wobei die Mittel zum Aktivieren ausgebildet sind zum Aktivieren der Sperre im Falle der Erkennung des Vorhandenseins eines Fahrers im Fahrzeug und/oder des Startens des Fahrzeugmotors durch die Mittel zum Erkennen.

**Claims**

1. A device for locking a windshield wiper (10) to a drive arm (12), **characterized in that** it comprises electrical means (4,4',29) able to drive a reversible movement of at least one locking element (3,5,9,17,19) secured to the arm (12) or to the wiper (10), said at least one locking element (3,5,9,17,19) moving relative to the arm (12) or to the wiper (10) to which it is secured between an unlocked position in which said at least one locking element (3,5,9,17,19) is secured only to the arm (12) or to the wiper (10) and a locked position in which said at least one element (3,5,9,17,19) is secured to the arm (12) and to the wiper (10).

2. The device as claimed in claim 1, **characterized in that** the electrical means (4,4') are able to actuate in translation a piston (3), the movement of said piston (3) driving movement of said at least one locking element (3,5,9,17).

3. The device as claimed in claim 2, **characterized in that** said piston (3) is the core of an electromagnet (4), said core (3) being movable in translation by the magnetic field produced by the electromagnet (4).

4. The device as claimed in claim 2, **characterized in that** said piston (3) is part of a device (4') enabling movement of the piston (3) by an electric current.

5. The device as claimed in any one of claims 2 to 4, **characterized in that**, in the unlocked position, said at least one locking element (3,5,9,17) is secured to a connector (24) of the wiper (10) and **in that**, in the locked position, said at least one locking element (3,5,9,17) is secured to the connector (24) and to an end part (28) of the arm (12).

6. The device as claimed in claim 5, **characterized in that** said at least one locking element (3,5,9,17) comprises at least one rod (5) able to be engaged in the locking position in an opening (6) of said end part (28) and to be held at a distance from said opening (6) in the unlocked position, said at least one rod (5) being preferably held in the unlocked position with the aid of a return element (7).

7. The device as claimed in claim 6, **characterized in that** said at least one rod (5) is movable in translation in a direction substantially orthogonal to the direction of movement of the piston (3).

8. The device as claimed in claim 5, **characterized in that** said at least one locking element (3,5,9,17) comprises a leaf spring (9) of which at least one end (9a) is able to be engaged in an opening (6) of the end part (28) of the arm (12) in the locked position.

9. The device as claimed in claim 5, **characterized in that** said at least one locking element (3,5,9,17) comprises a toothed shaft (17) driven in rotation by a toothed part (32) of the piston (3).

10. The device as claimed in any one of claims 1 to 4, **characterized in that** the piston (3) is secured to the arm (12) and **in that**, the arm (12) being able to be mounted on and demounted from an element (26) secured to the windshield wiper (10), the piston (3) is movable between an unlocked position, in which unlocking is authorized, and a locked position, in which the piston (3) forms a stop preventing demounting, the element (26) secured to the windshield wiper (10) being preferably an adapter.

11. The device as claimed in claim 10, **characterized in that** the arm (12) is able to be mounted on and demounted from the element (26) secured to the windshield wiper (10) with the aid of a clip (26a,26b) the clip comprising a lug (26a) mounted on a removable platform (26b), and **in that** the platform (26b) is provided with a housing (26c) to receive the piston (3) placed under the lug (26a), so that the piston (3) forms a stop for the platform (26b) when it is engaged in said housing (26c) in the locked position.

12. The device as claimed in claim 1, **characterized in that** said at least one locking element (3,5,9,17,19) comprises a bimetal strip (19), said electrical means (29) being preferably adapted to heat the bimetal strip (19).

13. The device as claimed in claim 12, **characterized in that** the bimetal strip (19) is deformable by a variation of temperature from a locked position in which it is secured to an end part (28) of the arm (12) and an adapter (26) to an unlocked position in which it is secured only to the end part (28).

14. Windshield wiper, **characterized in that** it comprises a locking device as claimed in any one of claims 1 to 13.

15. A motor vehicle, **characterized in that** it comprises a windshield wiper (10) and a drive arm (12), a device for locking the wiper (10) to the arm (12) as claimed in any one of claims 1 to 13, and means for activation of the locking and means for detection of the presence of a driver in the vehicle and/or the operation of an ignition switch in the vehicle, the activation means being able to activate the locking in the event of detection by the detection means of the presence of a driver in the vehicle and/or of starting of the engine of the vehicle.

**Fig. 1**

**Fig. 2**

**Fig. 3**

**Fig. 4A**

**Fig. 4B**

**Fig. 5A**

**Fig. 5B**

**Fig. 6A**

**Fig. 6B**

**Fig. 7A**

**Fig. 7B**

Fig. 8A

Fig. 8B

Fig. 9A

Fig. 9B

**Fig. 10A**

**Fig. 10B**

**Fig. 11A**

**Fig. 11B**

**Fig. 12A**

**Fig. 12B**

**Fig. 13**

**Fig. 14A**

**Fig. 14B**

**Fig. 14C**

**Fig. 15**

**Fig. 16**

**Fig. 17A**

**Fig. 17B**

**Fig. 18**

28 33a 33

12

Fig. 19

26

24

30

26

26f
26g
33a

Fig. 20

33

33

33a

28

12

30

26

Fig. 21

24

## RÉFÉRENCES CITÉES DANS LA DESCRIPTION

**Documents brevets cités dans la description**

- DE 102010040881 A1